**Europäisches Patentamt**

**European Patent Office**

**Office européen des brevets**

(19)

(11) Numéro de publication: **0 042 642**
**B1**

(12)

# FASCICULE DE BREVET EUROPEEN

(45) Date de publication du fascicule du brevet:
**09.05.84**

(51) Int. Cl.³: **H 04 L 1/24**

(21) Numéro de dépôt: **81200637.7**

(22) Date de dépôt: **11.06.81**

(54) **Système de test local d'un modem utilisant la modulation par déplacement de fréquence.**

(30) Priorité: **23.06.80 FR 8013867**

(43) Date de publication de la demande:
**30.12.81 Bulletin 81/52**

(45) Mention de la délivrance du brevet:
**09.05.84 Bulletin 84/19**

(84) Etats contractants désignés:
**DE FR GB IT NL SE**

(56) Documents cités:
**EP - A - 0 017 301**
**FR - A - 2 386 202**
**US - A - 4 015 220**

**ELECTRONICS AND COMMUNICATIONS IN JAPAN, vol.
57-A, no. 2, 1974 WASHINGTON (US) S. SHIMADA et al.:
"Fs modulator suitable for hybrid IC", pages 29-38**

(73) Titulaire: **TELECOMMUNICATIONS
RADIOELECTRIQUES ET TELEPHONIQUES T.R.T.,
88, rue Brillat Savarin, F-75013 Paris (FR)**

(72) Inventeur: **Boudault, Robert, SOCIETE CIVILE
S.P.I.D. 209 rue de l'Université, F-75007 Paris (FR)**

(74) Mandataire: **Charpail, François et al, Société Civile
S.P.I.D. 209, rue de l'Université, F-75007 Paris (FR)**

## Description

L'invention concerne un système de test local d'un modem utilisant la modulation par déplacement de fréquence et couplé à une ligne de transmission deux fils, les deux fréquences émises par le modem étant inférieures aux deux fréquences reçues et étant formées par un modulateur constitué par un multivibrateur commandé par les données et connecté à un filtre d'émission, le système de test comportant des moyens pour boucler le modem du côté de la ligne de transmission sous l'action d'un signal de commande de test.

Un modem du genre envisagé ci-dessus est, par exemple, un modem défini dans l'avis V 23 du CCITT, transmettant des données à 75 bauds sous forme de deux fréquences $f_o \pm \Delta f$ avec $f_o = 420$ Hz et $\Delta f = 30$ Hz, et recevant des données à 1200 bauds sous forme de deux fréquences $F_o \pm \Delta F$ avec $F_o = 1700$ Hz et $\Delta F = 400$ Hz. Ces modems peuvent trouver une très large utilisation dans des applications telles que l'annuaire électronique, le Vidéotex, etc., et il est important qu'ils soient simples et peu coûteux à construire. Une solution pour réaliser le modulateur est d'utiliser un circuit multivibrateur à fréquence commandée par les données, comme le décrit par exemple le brevet américain No 4039952.

Par ailleurs, dans ces modems, on doit prévoir un système local de test, ce test étant effectué, après avoir réalisé du côté de la ligne de transmission un bouclage du modem, appelé bouclage 3 dans l'avis V 54 du CCITT. Selon cet avis, la boucle réalisée pour le test doit inclure le nombre maximal de circuits utilisés en fonctionnement normal.

La présente invention vise à fournir un système de test simple et efficace pour vérifier, avec un minimum de changements dans le modem, le bon fonctionnement de tous les circuits utilisés dans le fonctionnement normal lorsque le modem est bouclé du côté de la ligne de transmission.

Conformément à l'invention, le multivibrateur commandé par les données est agencé pour fournir, sous l'action du signal de commande de test, deux fréquences de test résultant de la multiplication desdites fréquences émises par un facteur sensiblement égal au rapport des valeurs moyennes desdites fréquences reçues et émises, et le filtre d'émission est agencé pour transmettre lesdites fréquences de test sous l'action du signal de commande de test.

Dans un mode de réalisation préféré du multivibrateur du type décrit dans le brevet EP-A No 0017301, la multiplication des fréquences peut être effectuée après une commutation très simple utilisant deux résistances, sans aucun changement dans le circuit déplaçant la fréquence en fonction des données. Généralement le filtre d'émission est un filtre passe-bas en fonctionnement normal. Dans un mode de réalisation préféré, décrit par la suite, le filtre d'émission étant un filtre actif, connue en soi, par exemple, par le brevet US-A No 4015220, est transformé en filtre passe-bande pour transmettre les deux fréquences de test et cette transformation est effectuée par un simple changement de la valeur d'une résistance. Aucun changement n'est nécessaire dans la voie réception pour tester le modem, puisque les fréquences appliquées à la voie réception lors d'un test ont la même valeur moyenne que celle des fréquences reçues en fonctionnement normal.

La description suivante, en regard des dessins annexés, le tout donné à titre d'exemple, fera bien comprendre comment l'invention peut être réalisée.

La fig. 1 est le schéma de principe d'un modem auquel est associé le système de test de l'invention.

La fig. 2 est le schéma d'un mode de réalisation d'un modulateur convenant pour le système de test de l'invention.

La fig. 3 représente des diagrammes de signaux destinés à expliquer le fonctionnement du modulateur de la fig. 2.

La fig. 4 est le schéma d'un mode de réalisation d'un filtre d'émission convenant pour le système de test de l'invention.

La fig. 5 représente le gain du filtre d'émission de la fig. 4, en fonctionnement normal et en fonctionnement de test.

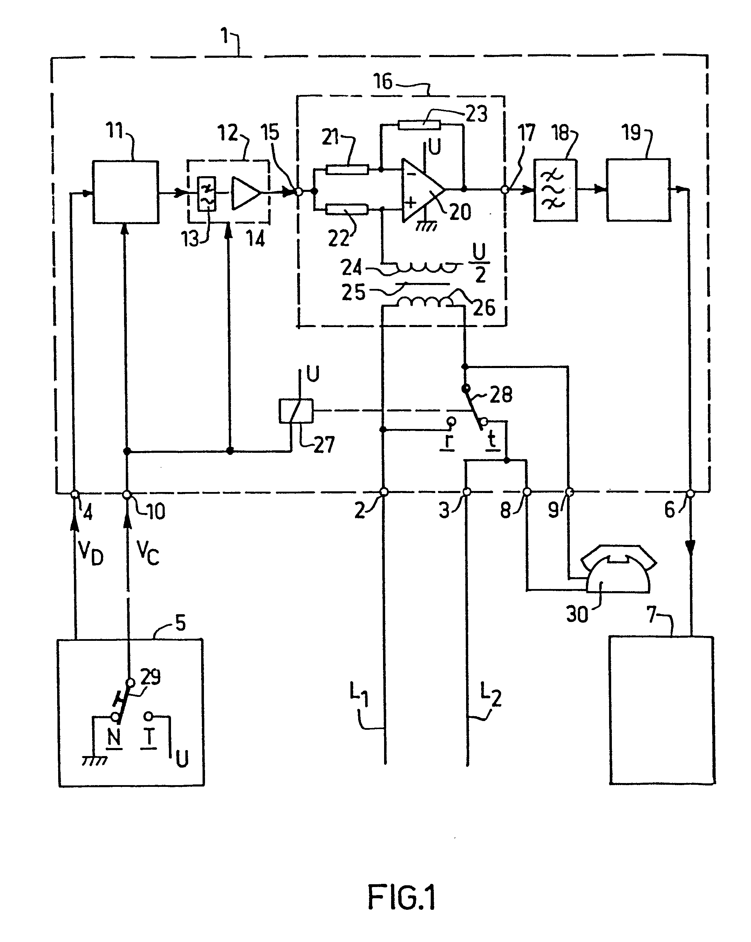

La fig. 1 montre le schéma de principe d'un modem relié à un terminal et des liaisons à effectuer pour procéder au test local de ce modem. On suppose par la suite, à titre d'exemple, qu'il s'agit d'un modem 75 bauds/1200 bauds, défini plus haut, connecté à un terminal installé chez un abonné téléphonique.

Le modem 1 est relié par ses bornes 2 et 3 aux deux fils $L_1$ $L_2$ d'une ligne de transmission téléphonique. Il reçoit sur sa borne 4 des données $V_D$ provenant de la partie d'émission 5 d'un terminal et fournit des données par sa borne 6 à la partie réception 7 du terminal. Le modem est en outre relié par ses bornes 8 et 9 à un poste téléphonique 30 et enfin, par sa borne 10, il peut recevoir un signal de commande de test $V_c$ provenant de la partie émission 5 du terminal.

On décrit d'abord le modem dans son fonctionnement normal. Ce modem utilise la modulation par déplacement de fréquence et sa voie d'émission comporte un modulateur 11 qui, dans l'exemple choisi, reçoit les données provenant de la borne 4 à la vitesse de 75 bits et fournit un signal prenant en fonction des données les fréquences $f_1 = 420 + 30$ Hz et $f_2 = 420 - 30$ Hz. Ce modulateur est un oscillateur du type multivibrateur et, dans un mode préféré de réalisation décrit par la suite, il fournit un signal à forme triangulaire qui est filtré par le filtre d'émission 12. Ce filtre 12 est, en fonctionnement normal, un filtre passe-bas qui doit transmettre les deux fréquences $f_1$, $f_2$ et atténuer les fréquences supérieures pour respecter diverses exigences spécifiées. Ce filtre 12 est un filtre actif dont on donnera par la suite un mode de réalisation et qui est représenté sur la fig. 1 de façon simplifiée par un réseau de filtrage 13 à résistances et capacités et par un amplificateur 14. La sortie du filtre 12 est reliée à l'accès émission 15 du circuit de couplage 16 destiné à coupler le modem à la ligne de transmission $L_1$ $L_2$.

A l'accès réception 17 de ce circuit de couplage est connectée la voie réception du modem qui traite un signal modulé par déplacement de fréquence provenant de la ligne de transmission $L_1$ $L_2$; dans l'exemple choisi, la rapidité de modulation est de 1200 bauds et les deux fréquences reçues sont, en fonction des données, $F_1 = 1700 + 400$ Hz et $F_2 = 1700 - 400$ Hz. La voie réception comporte en cascade, un filtre réception 18 qui transmet les fréquences $F_1$, $F_2$ avec une bande passante centrée sur la valeur moyenne $F_o = 1700$ Hz des fréquences $F_1$, $F_2$ et un démodulateur 19 qui fournit les données restituées à la borne 6.

Dans le mode de réalisation représenté, le circuit de couplage 16 comporte un amplificateur opérationnel 20 qui est alimenté par la tension U fournie par la borne positive d'une source d'alimentation dont l'autre borne est à la masse. Les deux entrées de cet amplificateur 20 sont reliées à l'accès émission 15 par les deux résistances 21 et 22 et sa sortie est reliée à l'accès réception 17. L'entrée inverseuse de l'amplificateur 20 est reliée à sa sortie à travers la résistance 23 et l'entrée non inverseuse est reliée à une borne portée à la tension

$$\frac{U}{2},$$

à travers l'enroulement 24 du transformateur 25. Les deux bornes de l'autre enroulement 26 du transformateur 25 sont, comme on le verra par la suite, directement reliées en fonctionnement normal aux deux bornes 2 et 3 constituant l'accès deux fils du modem. Le circuit de couplage 16 constitué de cette manière est équilibré au mieux, en fonctionnemet normal, pour qu'on ne retrouve, dans la voie réception 18, 19, pratiquement aucun signal provenant de la chaîne d'émission 11, 12, mais seulement le signal provenant de la ligne de transmission $L_1$, $L_2$ *via* les bornes 2 et 3. Cet équilibrage est réalisé avec deux résistances 21 et 22, ayant par exemple la même valeur, et avec une résistance 23, ayant sensiblement la valeur de l'impédance vue des deux bornes de l'enroulement 24 du transformateur 25 et comprenant principalement l'impédance de la ligne de transmission.

Pour effectuer le test du modem, on doit réaliser son bouclage du côté de la ligne de transmission de façon qu'aucun signal ne soit fourni pendant le test sur la ligne de transmission et qu'un signal de données provenant de la chaîne émission 11, 12 puisse être reconnu dans la chaîne de réception 18, 19. Pour effectuer le bouclage du modem, il est classique de déséquilibrer le circuit de couplage 16 et ce déséquilibre est réalisé en court-circuitant l'enroulement 26 du transformateur 25. Pour réaliser le bouclage du modem au moment d'un test, on a prévu sur la fig. 1 un relais constitué d'une bobine 27 et d'un contact inverseur 28. La bobine 27 a une borne à la tension U et l'autre borne reçoit le signal de commande de test $V_c$ qui vaut 0 en fonctionnement normal et U pendant un test. Ce signal $V_c$ est élaboré, par exemple comme l'indique la figure, au moyen du circuit commutateur manuel 29 qui en fonctionnement normal est sur la position N et pendant un test est sur la position T. On voit sur la figure que, en fonctionnement normal du modem, le relais est au travail, le contact inverseur 28 est sur la position t et les deux bornes de l'enroulement 26 du transformateur 25 sont reliées aux deux fils $L_1$, $L_2$ de la ligne de transmission . Pendant le test du modem, le relais est au repos, le contact inverseur 28 est sur la position r et l'enroulement 26 est court-circuité. On voit en outre que le poste téléphonique 30 relié aux bornes 8, 9 est court-circuité pendant le fonctionnement normal du modem et relié à la ligne de transmission le reste du temps.

Le bouclage du modem étant réalisé comme on vient de l'indiquer, la présente invention fournit les moyens d'adapter pendant le test, avec un minimum de modifications, la chaîne d'émission fonctionnant normalement à $420 \pm 30$ Hz à la chaîne de réception fonctionnant normalement à $1700 \pm 400$ Hz, de façon à pouvoir vérifier le bon fonctionnement de tous les circuits du modem.

Conformément à l'invention, le multivibrateur constituant le modulateur 11 est commandé par le signal de commande de test $V_c$ pour fournir en fonction des données, pendant un test, deux fréquences $f'_1$ et $f'_2$ résultant de la multiplication des fréquences $f_1$ et $f_2$ émises en fonctionnement normal, par un facteur n sensiblement égal au rapport $\frac{F_o}{f_o},$

$F_o$ étant la valeur moyenne des deux fréquences reçues $F_1$, $F_2$ en fonctionnement normal et $f_o$ étant la fréquence moyenne des deux fréquences émises $f_1$ et $f_2$ en fonctionnement normal. En même temps, le filtre d'émission 12 est commandé par le signal de commande $V_c$, pour transmettre, pendant un test, les fréquences $f'_1 = nf_1$ et $f'_2 = nf_2$.

Dans l'exemple choisi, les fréquences $f'_1$ et $f'_2$ à fournir par le modulateur 11 pendant un test sont $\frac{1700}{420}$ $(420 \pm 30)$ Hz $\simeq 1700 \pm 121$ Hz. Pendant le fonctionnement normal, le filtre 12 est, comme on l'a indiqué, un filtre passe-bas pour transmettre les deux fréquences $f_1$, $f_2$ égales à $420 \pm 30$ Hz et atténuer les fréquences supérieures. Pendant un test, ce filtre est transformé de façon à devenir un filtre passe-bande transmettant les deux fréquences $f'_1$, $f'_2$. On décrira par la suite des modes de réalisation préférés du multivibrateur constituant le modulateur 11 et du filtre d'émission 12, permettant d'effectuer très simplement les modifications de caractéristiques requises pour le test, en faisant travailler pratiquement tous les circuits utilisés en fonctionnement normal. Aucun autre changement n'est requis pour le test dans les autres circuits du modem, c'est-à-dire le circuit de couplage 16, et dans la voie de réception 18, 19. Les deux fréquences $f'_1$, $f'_2$ égales à $1700 \pm 121$ Hz appliquéses à la chaîne réception lors d'un test sont, en effet, exactement centrées autour de la fréquence moyenne $F_o = 1700$ Hz des deux fréquences $1700 \pm 400$ Hz reçues en fonctionnement normal. D'autre part, dans cet exemple, le déplacement de fréquence du signal appliqué à la voie réception est plus faible pendant un test

$(2\Delta f'=f'_1-f'_2=242 \text{ Hz})$ que pendant le fonctionnement normal $(2\Delta F=F_1-F_2=800 \text{ Hz})$, ce qui assure que les deux fréquences $f'_1$, $f'_2$ sont transmises par le filtre réception 18, sans perte de niveau notable.

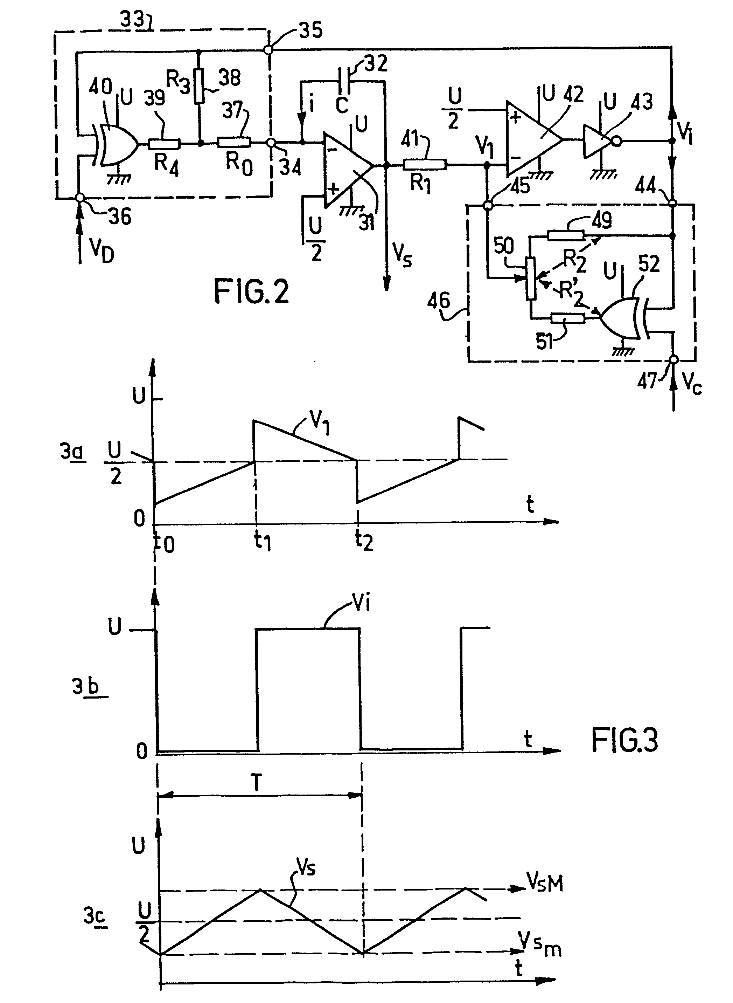

La fig. 2 représente un mode de réalisation préféré du modulateur 11, réalisé sous la forme d'un multivibrateur aisément commutable pour fournir en fonction des données, soit les fréquences $f_1$, $f_2$ utilisées en fonctionnement normal, soit les fréquences $f'_1=nf_1$ et $f'_2=nf_2$.

Le modulateur de la fig. 2 comporte un circuit intégrateur formé par un amplificateur opérationnel 31, par un condensateur 32 de capacité C connecté entre l'entrée inverseuse et la sortie de l'amplificateur 31 et, enfin, par un réseau 33 dont une borne 34 est reliée à l'entrée inverseuse de l'amplificateur opérationnel 31. Ce réseau 33 reçoit sur sa borne 35 une tension bivalente $V_i$ et, sur sa borne de commande 36, le signal de données $V_D$. Comme on l'expliquera par la suite, il circule entre les bornes 34 et 35 du réseau 33 un courant dépendant notamment de la valeur du signal de données $V_D$. Le réseau 33 est formé à cet effet par les deux résistances en série 37 et 38, ayant respectivement les valeurs $R_0$ et $R_3$ et connectées entre les bornes 34 et 35, et par la résistance 39, ayant la valeur $R_4$ et connectée entre la borne commune aux résistances 37 et 38 et la sortie du circuit OU exclusif 40. Une entrée de ce circuit OU exclusif est reliée à la borne 35 du réseau 33 et l'autre entrée est reliée à la borne de commande 36 de ce réseau. L'amplificateur 31 et le circuit OU exclusif 40 sont alimentés par la source de tension U. L'entrée non inverseuse de l'amplificateur 31 est portée à la tension

$$\frac{U}{2}.$$

Le signal de sortie de l'amplificateur 31 constitue le signal de sortie $V_S$ du modulateur.

La sortie de l'amplificateur opérationnel 31 est reliée par l'intermédiaire d'une résistance 41 de valeur $R_1$ à l'entrée inverseuse d'un amplificateur opérationnel 42 formant un circuit comparateur. Le circuit comparateur 42 est également alimenté par la source de tension U et son entrée non inverseuse est portée à la tension

$$\frac{U}{2}.$$

La sortie du circuit comparateur 42 est reliée à un circuit inverseur 43 qui est aussi alimenté par la tension U. La sortie du circuit inverseur 43 est reliée, d'une part, à la borne 35 du réseau 33 et, d'autre part, à la borne 44 d'un réseau 46 dont l'autre borne 45 est reliée à l'entrée inverseuse du circuit comparateur 42. Entre les bornes 44 et 45 du réseau 46, il circule, comme on l'expliquera par la suite, un courant dépendant notamment de la valeur du signal de commande de test $V_c$ appliqué sur sa borne de commande 47 et provenant du circuit commutateur 29 montré sur la fig. 1.

Le réseau 46 est constitué à cet effet par la résistance 49 connectée entre la borne 44 et une extrémité du potentiomètre 50 et par la résistance 51 connectée entre l'autre extrémité de ce potentiomètre et la sortie du circuit OU exclusif 52. Le curseur du potentiomètre 50 est relié à l'entrée inverseuse du circuit comparateur 42. La valeur des résistances insérées entre le curseur et la borne 44 est appelée par la suite $R_2$ et la valeur des résistances insérées entre ce curseur et la sortie du circuit OU exclusif 52 est appelée $R'_2$. Enfin les deux entrées de ce circuit OU exclusif sont reliées respectivement aux bornes 44 et 47 du réseau 46.

A la sortie du circuit inverseur 43, on obtient une tension bivalente $V_i$ qui passe de la valeur 0 à la valeur U, quand la tension $V_1$ sur l'entrée inverseuse du circuit comparateur 42 devient juste plus grande que la tension

$$\frac{U}{2},$$

et qui passe de la valeur U à la valeur 0, quand la tension $V_1$ devient juste plus faible que la tension

$$\frac{U}{2}.$$

Ce fonctionnement de bascule à seuil se produit avec une certaine hystérésis du fait que, quand la tension de sortie $V_i$ du circuit inverseur 43 passe de 0 à U, la tension $V_1$ monte brusquement de la valeur

$$\frac{U}{2}$$

à une valeur plus grande que

$$\frac{U}{2},$$

et quand la tension $V_i$ tombe de U à 0, la tension $V_1$ tombe brusquement de la valeur

$$\frac{U}{2}$$

à une valeur plus faible que

$$\frac{U}{2}.$$

Ce fonctionnement est analogue à celui du montage connu sous le nom de bascule de Schmidt.

On va examiner maintenant le fonctionnement du modulateur de la fig. 2. Ce fonctionnement est illustré par les diagrammes de la fig. 3. Le diagramme 3a représente le signal $V_1$ à l'entrée inverseuse du circuit comparateur 42; le diagramme 3b représente le signal bivalent $V_i$ à la sortie du circuit inverseur 43 et le diagramme 3c représente le signal de sortie $V_S$ du modulateur.

On se place initialement juste avant l'instant $t_0$ où le signal $V_1$ décroissant atteint juste la tension

$$\frac{U}{2}$$

appliquée à l'entrée non inverseuse du circuit du circuit comparateur 42. Le signal $V_i$ vaut alors U. Le courant $I_m$ traversant alors le réseau 46 de la borne 44 à la borne 45 peut prendre deux valeurs selon que le signal de commande de test $V_c$ vaut 0 ou U. Il est aisé de montrer que les deux valeurs de ce courant $I_m$ sont:

$$I_{m1}=\frac{U}{2}\left(\frac{1}{R_2}+\frac{1}{R'_2}\right) \quad \text{pour } V_c=0 \qquad (1)$$

$$I_{m2}=\frac{U}{2}\left(\frac{1}{R_2}-\frac{1}{R'_2}\right) \quad \text{pour } V_c=U \qquad (2)$$

Comme ce courant $I_m$ traverse également la résistance 41 de valeur $R_1$, on en déduit que le signal

$V_{Sm}$, sortant du modulateur juste avant l'instant $t_0$, peut prendre deux valeurs en fonction du signal de commande de test $V_c$:

$$V_{Sm1} = \frac{U}{2}\left[1 - R_1\left(\frac{1}{R_2} + \frac{1}{R'_2}\right)\right] \quad \text{pour } V_c = 0 \quad (3)$$

$$V_{Sm2} = \frac{U}{2}\left[1 - R_1\left(\frac{1}{R_2} - \frac{1}{R'_2}\right)\right] \quad \text{pour } V_c = U \quad (4)$$

A l'instant $t_0$, le comparateur 42 bascule, le signal $V_i$ tombe à zéro et le signal $V_1$ descend brusquement à une valeur inférieure à $\frac{U}{2}$.

Un courant i traverse alors le réseau 33 de la borne 34 à la borne 35, pour être appliqué au condensateur 32. Ce courant i peut prendre alors deux valeurs selon que le signal de données $V_D$ vaut 0 ou U. Comme pratiquement le signal sur l'entrée inverseuse de l'amplificateur opérationnel 31 reste égal à $\frac{U}{2}$, on peut montrer aisément que les deux valeurs du courant i sont:

$$i_1 = \frac{U}{2}\frac{\frac{1}{R_3} + \frac{1}{R_4}}{1 + R_0\left(\frac{1}{R_3} + \frac{1}{R_4}\right)} \quad \text{pour } V_D = 0 \quad (5)$$

$$i_2 = \frac{U}{2}\frac{\frac{1}{R_3} - \frac{1}{R_4}}{1 + R_0\left(\frac{1}{R_3} + \frac{1}{R_4}\right)} \quad \text{pour } V_D = U \quad (6)$$

Le courant i appliqué au condensateur 32 de capacité C reste pratiquement constant après l'instant $t_0$ et le signal de sortie $V_S$ du modulateur croît linéairement avec la pente $\frac{i}{C}$,

i pouvant prendre l'une ou l'autre des valeurs $i_1$ et $i_2$ selon la valeur du signal de données $V_D$.

Le signal $V_1$ croît également linéairement et on peut montrer que, juste avant l'instant $t_1$ où il atteint la tension $\frac{U}{2}$ appliquée sur l'entrée non inverseuse du circuit comparateur 42, le courant traversant le réseau 46 peut prendre, en fonction du signal de commande de test $V_c$, les valeurs $I_{m1}$ et $I_{m2}$ indiquées aux formules 1 et 2, avec un sens inversé par rapport au courant $I_m$ circulant juste avant l'instant $t_0$. On en déduit que le signal $V_{SM}$, sortant du modulateur juste avant l'instant $t_1$, peut prendre deux valeurs en fonction du signal de commande de test $V_c$:

$$V_{SM1} = \frac{U}{2}\left[1 + R_1\left(\frac{1}{R_2} + \frac{1}{R'_2}\right)\right] \quad \text{pour } V_c = 0 \quad (7)$$

$$V_{SM2} = \frac{U}{2}\left[1 + R_1\left(\frac{1}{R_2} - \frac{1}{R'_2}\right)\right] \quad \text{pour } V_c = U \quad (8)$$

A l'instant $t_1$, le comparateur 42 bascule, le circuit inverseur 43 fournit le signal $V_i = U$ et le signal $V_1$ monte brusquement à une valeur supérieure à $\frac{U}{2}$.

Le courant i traversant le réseau 33 s'inverse alors, en gardant l'une des deux valeurs $i_1$ ou $i_2$, selon la valeur du signal de données $V_D$. Le signal de sortie $V_S$ décroît linéairement avec une pente ayant la même valeur absolue que la pente après l'instant $t_0$. A l'instant $t_2$, le fonctionnement est identique à celui que l'on a expliqué pour l'instant $t_0$.

On voit aisément d'après le diagramme 3c que la pente $\frac{i}{C}$

de croissance ou de décroissance du signal de sortie $V_S$ peut s'écrire aussi

$$\frac{V_{SM} - V_{Sm}}{T/2},$$

T étant la période du signal $V_S$. On en déduit que d'une manière générale la fréquence f du signal de sortie $V_S$ du modulateur s'écrit:

$$f = \frac{i}{C}\frac{1}{V_{SM} - V_{Sm}} \quad (9)$$

En reportant dans cette formule 9 l'une ou l'autre des valeurs possibles de i données aux formules 5 et 6, l'une ou l'autre des valeurs possibles de $V_{Sm}$ données aux formules 3 et 4 et, enfin, l'une ou l'autre des valeurs possibles de $V_{SM}$ données aux formules 7 et 8, on obtient les différentes valeurs possibles de la fréquence f en fonction du signal de données $V_D$ et du signal de commande de test:

En fonctionnement normal, c'est-à-dire pour $V_c = 0$, on a:

$$\text{pour } V_D = 0, \quad f_1 = \frac{R_2 \cdot R'_2}{R'_2 + R_2} \cdot \frac{1}{4C\,R_1}$$

$$\left[\frac{\frac{1}{R_3} + \frac{1}{R_4}}{1 + R_0\left(\frac{1}{R_3} + \frac{1}{R_4}\right)}\right] \quad (10)$$

$$\text{pour } V_D = U, \quad f_2 = \frac{R_2 \cdot R'_2}{R'_2 + R_2} \cdot \frac{1}{4C\,R_1}$$

$$\left[\frac{\frac{1}{R_3} - \frac{1}{R_4}}{1 + R_0\left(\frac{1}{R_3} + \frac{1}{R_4}\right)}\right] \quad (11)$$

En fonctionnement de test, c'est-à-dire pour $V_c = U$, on a:

$$\text{pour } V_D = 0, \quad f'_1 = \frac{R_2 \cdot R'_2}{R'_2 - R_2} \cdot \frac{1}{4C\,R_1}$$

$$\left[\frac{\frac{1}{R_3} + \frac{1}{R_4}}{1 + R_0\left(\frac{1}{R_3} + \frac{1}{R_4}\right)}\right] \quad (12)$$

$$\text{pour } V_D = U, \quad f'_2 = \frac{R_2 \cdot R'_2}{R'_2 - R_2} \cdot \frac{1}{4C\,R_1}$$

$$\left[\frac{\frac{1}{R_3} - \frac{1}{R_4}}{1 + R_0\left(\frac{1}{R_3} + \frac{1}{R_4}\right)}\right] \quad (13)$$

Ces formules montrent que le facteur de multiplication n, tel que $f'_1 = nf_1$ et $f'_2 = nf_2$, à la valeur:

$$n = \frac{R'_2 + R_2}{R'_2 - R_2}$$

On peut pratiquement régler les diverses résistances du modulateur pour qu'il fournisse en fonctionnement normal les fréquences requises $f_1$ et $f_2$ et, lors d'un test, les fréquences $f_1$ et $f_2$ multipliées par le rapport n requis. Il est avantageux que le réseau 46 comprenne un potentiomètre 50 branché comme le représente la fig. 2. De cette manière, le réglage fin du facteur de multiplication n peut être effectué par le curseur de ce potentiomètre sans pratiquement modifier les fréquences $f_1$ et $f_2$, car la somme $R'_2 + R_2$ reste fixe.

Il résulte clairement du schéma de la fig. 2 que tous les composants du moduateur qui sont utilisés en fonctionnement normal sont également mis en œuvre lors d'un test. On peut remarquer, en outre, que la modulation de fréquence par le signal de données $V_D$ est effectuée exactement de la même manière dans les deux modes de fonctionnement, ce qui contribue encore à l'efficacité du test.

Un avantage supplémentaire du modulateur de la fig. 2 est de ne nécessiter qu'une seule source d'alimentation, puisque les tensions de référence

$$\frac{U}{2}$$

appliquées aux entrées d'amplificateurs opérationnels peuvent être obtenues par un pont diviseur de tension connecté sur cette source d'alimentation. Il est avantageux enfin que les circuits actifs soient réalisés dans la technologie CMOS, ce qui réduit la résistance de sortie de ces circuits et donc leur variation absolue avec la température.

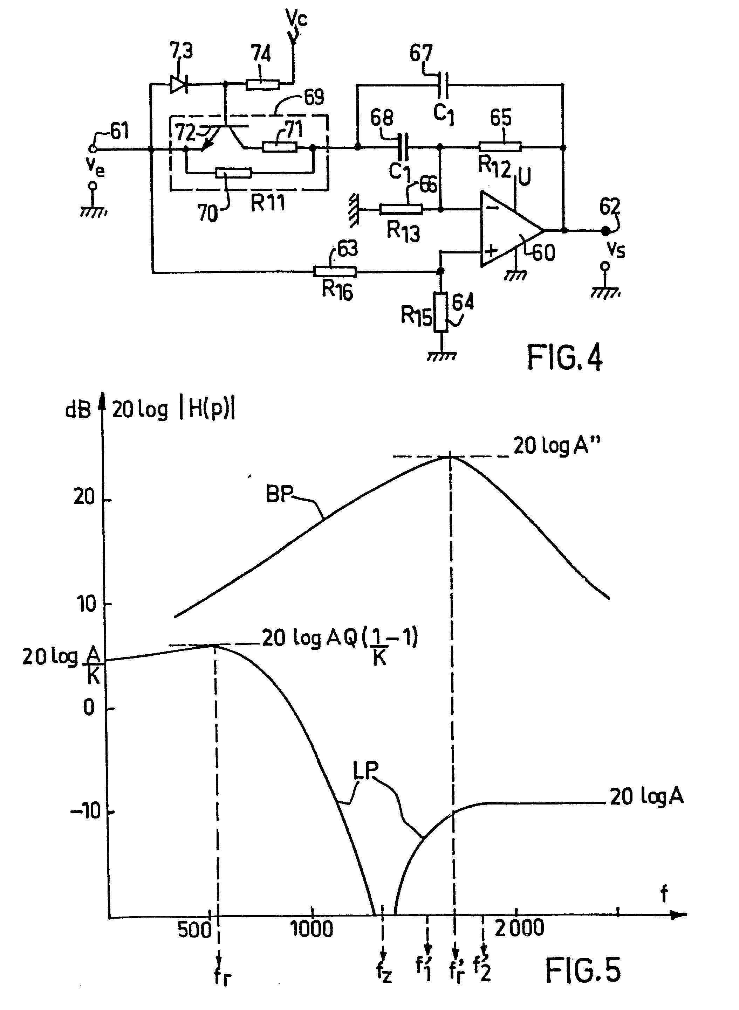

La fig. 4 montre le schéma d'un mode de réalisation d'un filtre d'émission 12 aisément commutable d'une fonction de filtre passe-bas pour transmettre les fréquences $f_1$, $f_2$ en fonctionnement normal à une fonction de filtre passe-bande pour transmettre lors d'un test les fréquences $f'_1 = nf_1$ et $f'_2 = nf_2$. Ce mode de réalisation présente notamment l'avantage que tous les circuits sont mis en œuvre dans les deux modes de fonctionnement.

Le filtre montré sur la fig. 4 est un filtre actif comportant un amplificateur opérationnel 60 qui est alimenté par la source de tension U. Le filtre comporte une borne d'entrée 61 qui reçoit la tension d'entrée $v_e$ et une borne de sortie 62 qui est reliée à la sortie de l'amplificateur 60 et qui fournit la tension de sortie $v_s$. La borne d'entrée 61 est reliée à une extrémité d'un diviseur de tension formé par les résistances en série 63, 64 ayant respectivement les valeurs $R_{16}$ et $R_{15}$. L'autre extrémité de ce diviseur de tension est à la masse et sa borne intermédiaire est reliée à l'entrée non inverseuse de l'amplificateur 60. L'entrée inverseuse de cet amplificateur est connectée à la borne commune des deux résistances 65 et 66 ayant respectivement les valeurs $R_{12}$ et $R_{13}$. L'autre borne de la résistance 65 est reliée à la sortie de l'amplificateur 60 et l'autre borne de la résistance 66 est à la masse. Aux bornes de la résistance 65 est connecté le montage en série des deux condensateurs 67 et 68 ayant la même valeur $C_1$. La borne commune de ces deux condensateurs est reliée à la borne 61 du filtre à travers un circuit 69 se comportant comme une résistance à valeur ohmique $R_{11}$ variable avec le signal de commande de test $V_c$. Ce circuit 69 est formé par une résistance 70 aux bornes de laquelle est connecté le montage en série de la résistance 71 et de l'espace émetteur/collecteur du transistor npn 72. Entre la base de l'émetteur de ce transistor est connectée, dans le sens indiqué, la diode 73. La base du transistor 72 reçoit le signal de commande de test $V_c$ à travers la résistance 74. En fonctionnement normal, le transistor 72 est bloqué et la valeur ohmique $R_{11}$ du circuit 69 est celle de la résistance 70. Pendant un test, le transistor 72 est passant et la valeur ohmique $R_{11}$ du circuit 69 est celle du montage en parallèle des résistances 70 et 71.

On peut montrer que la fonction de transfert

$$H(p) = \frac{v_s}{v_e}$$

du filtre que l'on vient de décrire peut s'écrire d'une manière générale:

$$H(p) = \frac{A\left(\frac{\omega_r^2}{K} + p^2\right)}{\omega_r^2 + p\frac{\omega_r}{Q} + p^2} + \frac{A' p \frac{\omega_r}{Q}}{\omega_r^2 + p\frac{\omega_r}{Q} + p^2} \quad (14)$$

avec $p = j\omega$ $\quad \omega = 2\Pi f$.

$$\left. \begin{array}{l} \omega_r = \dfrac{1}{C_1 \sqrt{R_{11} \cdot R_{12}}} \\[2mm] Q = \dfrac{1}{2}\sqrt{\dfrac{R_{12}}{R_{11}}} \\[2mm] K = \dfrac{1}{1 + \dfrac{R_{12}}{R_{13}}} \\[2mm] A = \dfrac{R_{15}}{R_{15} + R_{16}} \\[2mm] A' = A\left(1 + \dfrac{R_{12}}{R_{13}} + \dfrac{R_{12}}{2R_{11}}\right) - \dfrac{R_{12}}{2R_{11}} \end{array} \right\} \quad (15)$$

Le spécialiste peut voir aisément que, pour $K < 1$, le premier terme de la formule 14 est la fonction de transfert d'un passe-bas du deuxième ordre ayant une transmission maximale pour la fréquence de résonance

$$f_r = \frac{\omega_r}{2\Pi}$$

et un zéro de transmission pour la fréquence

$$f_z = \frac{f_r}{\sqrt{K}}.$$

La courbe LP de la fig. 5 représente, en fonction de la fréquence f, le gain $|H(p)|$ du filtre passe-bas correspondant au premier terme de la formule 14;

ce gain est exprimé en décibels et les valeurs littérales indiquées peuvent être facilement établies à partir de la formule 14.

Le deuxième terme de la formule 14 est la fonction de transfert d'un filtre passe-bande, dont la bande passante est approximativement centrée sur la fréquence $f_r = \frac{\omega_r}{2\Pi}$.

Pour définir les deux configurations à donner au filtre pour le fonctionnement normal et le fonctionnement en test, on utilise par la suite l'exemple déjà cité où les deux fréquences $f_1$, $f_2$ à transmettre en fonctionnement normal ont les valeurs $420 \pm 30$ Hz et les deux fréquences $f'_1$, $f'_2$ à transmettre en fonctionnement de test ont les valeurs $1700 \pm 121$ Hz.

Pour le fonctionnement normal, on détermine les éléments du filtre pour que sa fonction de transfert soit celle d'un filtre passe-bas dont le gain a la forme de la courbe LP montrée à la fig. 5, c'est-à-dire ne comporte que le premier terme de la formule 14 et ne comporte pas le deuxième terme. La détermination des éléments du filtre peut être faite à partir des 5 équations (15). On se fixe notamment $A'=0$ pour éliminer le deuxième terme de la formule 14. On se fixe la fréquence

$$f_r = \frac{\omega_r}{2\Pi}$$

qui peut être un peu supérieure aux fréquences à transmettre $f_1$, $f_2$. Par exemple $f_r = 532$ Hz pour transmettre $f_1$, $f_2 = 420 \pm 30$ Hz. On se fixe la fréquence $f_z$ où le filtre a un zéro, ce qui revient à se fixer K. Dans l'exemple choisi, $f_z = 1350$ Hz pour éliminer l'harmonique 3 de la fréquence $f_1 = 450$ Hz, qui est très proche de l'une des fréquences $F_1$, $F_2 = 1700 \pm 400$ Hz reçue par le modem en fonctionnement normal. En se fixant enfin des valeurs de A et Q, la forme de la courbe de gain du filtre passe-bas est complètement définie. Ainsi, en se fixant une capacité $C_1$, les 5 valeurs des résistances $R_{11}$, $R_{12}$, $R_{13}$, $R_{15}$, $R_6$ peuvent être déterminées à partir des 5 équations (15).

On appelle $R_{11}^N$ la valeur ohmique du circuit 69, déterminée comme on vient de l'indiquer pour que le filtre fonctionne en passe-bas. Pour que le filtre fonctionne, lors d'un test, en passe-bande pour transmettre les deux fréquences $f'_1$, $f'_2$ centrées autour de la fréquence de résonance $f'_r$ du filtre passe-bande, il suffit de donner au circuit 69 une valeur ohmique $R_{11}^T$, telle que:

$$R_{11}^T = \frac{R_{11}^N}{m^2} \quad \text{avec } m = \frac{f'_r}{f_r} \quad (16)$$

En effet, en donnant au circuit 69 une valeur ohmique différente de $R_{11}^N$, le deuxième terme de la formule 14 qui représente la fonction de transfert d'un filtre passe-bande n'est plus nul. En donnant au circuit 69 la valeur de résistance

$$\frac{R_{11}^N}{m^2}$$

et en conservant la même valeur pour les autres éléments du filtre, on voit d'après les équations (15) que:

$\omega_r$ devient $\omega'_r = 2\Pi f'_r = m\omega_r$
$Q$ devient $Q' = mQ$

$A'$ devient $A'' = A\left(1 + \frac{R_{12}}{R_{13}} + \frac{R_{12}}{2R_{11}^N}m^2\right) - \frac{R_{12}\,m^2}{2R_{11}^N}$

A et K sont inchangés
La fonction de transfert du filtre devient:

$$H'(p) = \frac{A\left(\frac{\omega'^2_r}{K}+p^2\right)}{\omega'^2_r + p\frac{\omega'_r}{Q'}+p^2} + \frac{A''\,p\frac{\omega'_r}{Q'}}{\omega'^2_r + p\frac{\omega'_r}{Q'}+p^2} \quad (17)$$

Dans un certain domaine de fréquences autour de $f'_r = \frac{\omega'_r}{2\Pi}$,

c'est le deuxième terme de la formule 17 qui est prépondérant. Ce deuxième terme correspond à la fonction de transfert d'un filtre passe-bande centré approximativement autour de la fréquence de résonance $f'_r$. Le gain de ce filtre vaut sensiblement $A''$ pour la fréquence de résonance $f'_r$. Il tend vers A quand la fréquence f tend vers l'infini et vers

$$\frac{A}{K}$$

quand la fréquence f tend vers 0. Le gain du filtre correspondant à la formule 17 a, en fonction de la fréquence, l'allure représentée par la courbe BP sur la fig. 5, ce gain étant exprimé en décibels. On a ur gain maximal pour la fréquence $f'_r$. Les deux fréquences $f'_1$ et $f'_2$ sont situées de part et d'autre de la fréquence $f'_r$ et sont transmises avec un affaiblissement réduit. Les valeurs numériques indiquées sur les axes de la fig. 5 correspondent à un filtre d'émission réalisé pour le modem choisi ci-dessus comme exemple.

Le passage de la courbe de gain LP d'un filtre passe-bas pour le fonctionnement normal à la courbe de gain BP d'un filtre passe-bande pour le fonctionnement en test est effectué simplement en changeant la valeur ohmique du circuit 69, de $R_{11}^N$ à $\frac{R_{11}^N}{m^2}$,

conformément à la formule 16. Dans l'exemple choisi, $m = \frac{1700}{532} \simeq 3,19$.

Le changement de la valeur ohmique du circuit 69 est effectué au moyen du signal de commande de test $V_c$, comme on l'a expliqué.

## Revendications

1. Système de test local d'un modem utilisant la modulation par déplacement de fréquence et couplé à une ligne de transmission deux fils ($L_1$, $L_2$), les deux fréquences ($f_1$, $f_2$) émises par le modem étant inférieures aux deux fréquences ($F_1$, $F_2$) reçues et étant formées par un modulateur (11) constitué par un multivibrateur commandé par les données ($V_D$) et connecté à un filtre d'émission (12), le système de test comportant des moyens (27, 28) pour boucler le modem du côté de la ligne de transmission sous l'action d'un signal de commande de test, caractérisé en ce que le multivibrateur commandé par les données est agencé pour fournir, sous l'action du signal de commande de test ($V_c$), deux fréquences de test ($nf_1$, $nf_2$) résultant de la multiplication desdites fréquences émises par un facteur (n) sensiblement égal au rapport des valeurs moyennes desdites fréquences reçues ($F_0$) et émises ($f_0$), et en ce que le filtre d'émission est agencé pour transmettre lesdites fréquences de test ($nf_1$, $nf_2$) sous l'action du signal de commande de test ($V_c$).

2. Modulateur (11) convenant pour le système de test selon la revendication 1 et constitué par un circuit intégrateur (31, 32) dont la sortie est reliée à l'entrée (−) d'une bascule à seuil (42) avec hystérésis, la sortie de la bascule à seuil (42) étant connectée à l'entrée du circuit intégrateur (31, 32) par l'intermédiaire d'un premier réseau (33) de résistances (37-39) muni de moyens logiques (40) pour commander, en fonction du signal de données ($V_D$), le courant fourni par ledit premier réseau audit circuit intégrateur (31, 32) de façon que ce dernier fournisse un signal triangulaire ($V_S$) dont la fréquence dépend du signal de données ($V_D$), caractérisé en ce que, entre la sortie et l'entrée de la bascule à seuil, est connecté un deuxième réseau (46) de résistances (49-51) muni de moyens logiques (52) pour commander le courant qui le traverse, en fonction du signal de commande de test ($V_c$), les résistances des deux réseaux (33, 46) étant choisies de façon que les fréquences fournies en fonction du signal de données aient les valeurs requises ($f_1$, $f_2$) en fonctionnement normal et n fois ces valeurs ($nf_1$, $nf_2$) en fonctionnement de test, n étant ledit facteur de multiplication.

3. Modulateur (11) selon la revendication 2, dans lequel la bascule à seuil (42) avec hystérésis est formée par un amplificateur opérationnel dont une entrée (+) est portée à une tension de référence

$$\left(\frac{U}{2}\right)$$

et dont la sortie est connectée à un circuit inverseur (43), caractérisé en ce que ledit deuxième réseau (46) est constitué par le montage en série de deux circuits résistants ($R_2$, $R'_2$) connectés entre la sortie dudit circuit inverseur (43) et la sortie d'un circuit OU exclusif (52) dont une entrée est reliée à la sortie du circuit inverseur et l'autre entrée (47) reçoit le signal de commande de test ($V_c$), la borne commune (45) entre les deux circuits résistants ($R_2$, $R'_2$) étant connectée à l'autre entrée de l'amplificateur opérationnel (42).

4. Filtre actif d'émission (12) convenant pour le système de test selon la revendication 1, caractérisé en ce que ses éléments sont agencés pour que sa fonction de transfert soit la somme d'un premier terme correspondant à un filtre passe-bas du deuxième ordre et d'un deuxième terme correspondant à un filtre passe-bande du deuxième ordre, ces éléments étant déterminés de façon qu'en fonctionnement normal ledit deuxième terme soit annulé et la fréquence de résonance ($f_r$) du filtre passe-bas correspondant audit premier terme permette la transmission des deux fréquences ($f_1$, $f_2$) émises par le modem, le filtre étant modifié par le signal de commande de test ($V_c$), de façon que, en fonctionnement de test, la fréquence de résonance ($f'_r$) du filtre passe-bande correspondant audit deuxième terme soit sensiblement égale à la valeur moyenne ($F_0$) des fréquences de test ($nf_1$, $nf_2$).

5. Filtre actif d'émission (12) selon la revendication 4, caractérisé en ce que le signal de commande de test ($V_c$) agit sur la valeur d'une résistance (69) qui détermine la fréquence de résonance du filtre en fonctionnement normal ($f_r$) et en fonctionnement de test ($f'_r$).

## Patentansprüche

1. System zum lokalen Testen eines FSK-Modems, der mit einer Zweidraht-Übertragungsleitung ($L_1$, $L_2$) verbunden ist, wobei die zwei von dem Modem ausgesendeten Frequenzen ($f_1$, $f_2$) niedriger sind als zwei empfangene Frequenzen ($F_1$, $F_2$) und erzeugt werden von einem Modulator (11) in Form eines von den Daten ($V_D$) gesteuerten Multivibrators, der mit einem Sendefilter (12) verbunden ist, wobei das Testsystem Mittel (27, 28) zum leitungsseitigen Schleifen des Modems als Antwort auf ein Testbefehlsignal enthält, dadurch gekennzeichnet, dass der datengesteuerte Multivibrator als Antwort auf das Testbefehlsignal ($V_c$) zwei Testfrequenzen ($nf_1$, $nf_2$) erzeugt, die sich aus der Multiplikation der genannten ausgesendeten Frequenzen mit einem Faktor (n) ergeben, der dem Verhältnis zwischen den Mittelwerten ($F_0$ bzw. $f_0$) der genannten empfangenen bzw. ausgesendeten Frequenzen praktisch gleich ist, und dass das Sendefilter angeordnet ist, um die genannten Testfrequenzen ($nf_1$, $nf_2$) als Antwort auf das Testbefehlsignal ($V_C$) zu übertragen.

2. Modulator (11), geeignet für das Testsystem nach Anspruch 1 und bestehend aus einem Integrator (31, 32), dessen Ausgang mit dem (−)-Eingang einer bistabilen Kippschaltung (42) mit Schwellenhysterese verbunden ist, wobei der Ausgang der genannten bistabilen Schaltung (42) mit dem Eingang des Integrators (31, 32) mittels eines ersten Netzwerkes (33) aus Widerständen (37-39) verbunden ist, das logische Mittel (40) enthält, um als Funktion des Datensignals ($V_D$) den durch das genannte erste Netzwerk dem Integrator (31, 32) zugeführten Strom derart zu steuern, dass der Integrator ein Dreiecksignal ($V_S$) erzeugt, dessen Frequenz von dem Datensignal ($V_D$) abhängig ist, dadurch gekennzeichnet, dass zwischen dem Ausgang und dem Eingang der genannten bistabilen Kippschaltung ein zweites Netzwerk (46) aus Widerständen (49-51) liegt, das logische Mittel (52) enthält zur Steuerung des durch dieses Netzwerk fliessenden Stromes als Funktion des Testbefehlsignals ($V_c$), wobei die Widerstände der zwei Netzwerke (33, 46) derart gewählt worden sind, dass die als Funktion des Datensignals erzeugten Frequenzen im normalen Betrieb die erforderlichen Werte $(f_1, f_2)$ und im Testbetrieb die Werte $(nf_1, nf_2)$ haben, wobei n der genannte Faktor der Multiplikation ist.

3. Modulator (11) nach Anspruch 2, wobei die bistabile Kippschaltung (42) mit Schwellenhysterese durch eine Operationsverstärker gebildet wird, von dem ein (+)-Eingang mit einer Bezugsspannung

$$\left(\frac{U}{2}\right)$$

verbunden ist und von dem ein Ausgang mit einer Inverterschaltung (43) verbunden ist, dadurch gekennzeichnet, dass das genannte zweite Netzwerk (46) durch die Reihenschaltung aus zwei Widerständen $(R_2, R'_2)$ zwischen dem Ausgang der genannten Inverterschaltung (43) und dem Ausgang einer Exklusiv-ODER-Schaltung (52) gebildet ist, von der ein Eingang mit dem Ausgang der genannten Inverterschaltung verbunden ist und der andere Eingang (47) das Testbefehlsignal $(V_c)$ erhält, wobei die Verbindung (45) der zwei Widerstände $(R_2, R'_2)$ mit dem anderen Eingang des Operationsverstärkers (42) verbunden ist.

4. Aktives Sendefilter (12) für das Testsystem nach Anspruch 1, dadurch gekennzeichnet, dass die Elemente derart angeordnet sind, dass die Übertragungsfunktion die Summe eines ersten Terms entsprechend einem Tiefpassfilter zweiter Ordnung und eines zweiten Terms entsprechend einem Bandpassfilter zweiter Ordnung ist, wobei diese Elemente derart gewählt worden sind, dass im normalen Betrieb der genannte zweite Term gleich Null ist und die Resonanzfrequenz $(f_r)$ des Tiefpassfilters entsprechend dem genannten ersten Term die Übertragung der zwei von dem Modem ausgesendeten Frequenzen $(f_1, f_2)$ gestattet, wobei das Filter durch das Testbefehlsignal $(V_c)$ derart geändert wird, dass im Testbetrieb die Resonanzfrequenz $(f'_r)$ des Bandpassfilters entsprechend dem genannten zweiten Term dem Mittelwert $(F_0)$ der Testfrequenzen $(nf_1, nf_2)$ praktisch gleich ist.

5. Aktives Sendefilter nach Anspruch 4, dadurch gekennzeichnet, dass das Testbefehlsignal $(V_c)$ den Wert eines Widerstandes (69) beeinflusst, der die Resonanzfrequenz des Filters im normalen Betrieb $(f_r)$ und im Testbetrieb $(f'_r)$ bestimmt.

**Claims**

1. A system for locally testing a modem employing frequency shift keying and coupled to a two-wire transmission line $(L_1, L_2)$, the two frequencies $(f_1, f_2)$ transmitted by the modem being lower than two received frequencies $(F_1, F_2)$ and being produced by a modulator (11) in the form of a multivibrator controlled by data $(V_D)$ and connected to a transmission filter (12), the test system comprising means (27, 28) for looping the modem at the transmission line side in response to a test control signal, characterized in that the data-controlled multivibrator is arranged so as to produce, in response to the test control signal $(V_D)$, two test frequencies $(nf_1, nf_2)$ which are obtained by multiplying the said transmitted frequencies by a factor (n) substantially equal to the ratio between the average values $(F_0)$ and $f_0)$ of the said received and transmitted frequencies, and that the transmission filter is arranged for transmitting said test frequencies $(nf_1, nf_2)$ in response to the test control signal $(V_c)$.

2. A modulator (11) suitable for the test system as claimed in Claim 1, and constituted by an integrating circuit (31, 32) whose output is connected to the (−) input of a bistable circuit (42) having trigger hysteresis, the output of said bistable circuit (42) being connected to the input of the integrating circuit (31, 32) by means of a first network (33) of resistors (37-39) and comprising logic means (40) for controlling, as a function of the data signal $(V_D)$ the current applied by said first network to said integrating circuit (31, 32) in order to ensure that the latter produces a triangular signal $(V_S)$ whose frequency depends on the data signal $(V_D)$, characterized in that a second network (46) of resistors (49-51) is connected between the output and input of said bistable circuit, said second network comprising logic means (52) for controlling the current flowing through this network as a function of the test control signal $(V_c)$, the resistors of the two networks (33, 46) being chosen in such a way that the frequencies produced as a function of the data signal have the required values $(f_1, f_2)$ during normal operation and the values $(nf_1, nf_2)$ during the testing mode, n being said multiplying factor.

3. A modulator (11) as claimed in Claim 2, in which said bistable circuit (42) having trigger hysteresis is constituted by an operational amplifier, a (+) input of which is connected to a reference voltage

$$\left(\frac{U}{2}\right)$$

and the output of which is connected to an inverter circuit (43), characterized in that said second network (46) is formed by the series arrangement of two resistive circuits $(R_2, R'_2)$ connected between the output of said inverter circuit (43) and the output of an exclusive-OR circuit (52), one input of which is connected to the output of said inverter circuit and the other input (47) receives the test control signal $(V_c)$, the junction (45) of the two resistive circuits $(R_2, R'_2)$ being connected to the other input of the operational amplifier (42).

4. An active transmission filter (12) suitable for use in the test system as claimed in Claim 1, characterized in that its elements are arranged in such a way that its transfer function is the sum of a first term corresponding to a second-order low-pass filter and a second term corresponding to a second-order band-pass filter, those elements being chosen in such a way that, during normal operation, said second term is eliminated and the resonant frequency $(f_r)$ of the low-pass filter corresponding to said first term allows the transmission of the two frequencies $(f_1, f_2)$, the

filter being modified by the test control signal ($V_c$), such that during the testing mode the resonant frequency ($f'_r$) of the band-pass filter corresponding to said second term is substantially equal to the average value ($F_o$) of the test frequencies ($nf_1$, $nf_2$).

5. An active transmission filter as claimed in Claim 4, characterized in that the test control signal ($V_c$) acts on the value of a resistor (69) which determines the resonant frequency of the filter during normal operation ($f_r$) and during the testing mode ($f'_r$).

FIG.1

FIG.2

FIG.3

FIG. 4

FIG.5